# EUROPEAN PATENT APPLICATION

(11) **EP 3 550 438 A1**
(43) Date of publication of application: **09.10.2019**
(21) Application number: 17879384.0
(22) Date of filing: 27.10.2017
(51) Int. Cl.: G06F 13/00, G06F 3/01, G06F 3/0481, G06F 3/0488, H04M 1/00

(54) **INFORMATION PROCESSING APPARATUS, INFORMATION PROCESSING METHOD, PROGRAM, AND INFORMATION PROCESSING SYSTEM**

(30) Priority: 05.12.2016 JP 2016235573
(71) Applicant: Sony Corporation, Tokyo 108-0075 (JP)
(72) Inventor: NAKAGAWA, Ayumi, Tokyo 108-0075 (JP); OGITA, Takeshi, Tokyo 108-0075 (JP)
(74) Representative: MFG Patentanwälte Meyer-Wildhagen Meggle-Freund Gerhard PartG mbB
(86) International application number: PCT/JP2017/038890
(87) International publication number: WO 2018/105266

(57) **Abstract**

[Object] To effectively reduce the data communication traffic in information communication regarding vibration.

[Solution] Provided is an information processing apparatus including: a communication unit configured to receive input information that is inputted on a user interface displayed on a transmission source apparatus and meta-information regarding the input information; an analysis unit configured to analyze the meta-information and specify a vibration type; a waveform storage unit configured to store the vibration type and vibration waveform data in association with each other; and an output control unit configured to cause an output unit to output a tactile stimulus corresponding to the vibration waveform data acquired from the waveform storage unit on the basis of the vibration type.

## Description

### Technical Field

The present disclosure relates to an information processing apparatus, an information processing method, a program, and an information processing system.

### Background Art

Various devices for generating vibration are developed nowadays. In addition, a device equipped with the device as described above and using vibration as one of information transmission means becomes widespread. In one example, Patent Literature 1 discloses a technique of presenting internal information of a terminal to a user by vibration.

### Citation List

### Patent Literature

Patent Literature 1: JP 2010-136151A

### Disclosure of Invention

### Technical Problem

Meanwhile, the device using vibration as described above is also conceived to perform communication regarding vibration information with other devices, in addition to processing that is completed within the device as described in Patent Literature 1. However, wideband-vibration information is comparable to the amount of data equivalent to speech information, so in a case of performing communication of vibration information, data communication traffic is conceived to increase.

In view of this, the present disclosure provides a novel and improved information processing apparatus, information processing method, program, and information processing system, capable of effectively reducing the data communication traffic in information communication regarding vibration.

### Solution to Problem

According to the present disclosure, there is provided an information processing apparatus including: a communication unit configured to receive input information that is inputted on a user interface displayed on a transmission source apparatus and meta-information regarding the input information; an analysis unit configured to analyze the meta-information and specify a vibration type; a waveform storage unit configured to store the vibration type and vibration waveform data in association with each other; and an output control unit configured to cause an output unit to output a tactile stimulus corresponding to the vibration waveform data acquired from the waveform storage unit on the basis of the vibration type.

In addition, according to the present disclosure, there is provided an information processing method performed by a processor, the information processing method including: receiving input information that is inputted on a user interface displayed on a transmission source apparatus and meta-information regarding the input information; analyzing the meta-information and specifying a vibration type; storing the vibration type and vibration waveform data in association with each other; and causing an output unit to output a tactile stimulus corresponding to the vibration waveform data acquired on the basis of the vibration type.

In addition, according to the present disclosure, there is provided a program causing a computer to function as an information processing apparatus including: a communication unit configured to receive input information that is inputted on a user interface displayed on a transmission source apparatus and meta-information regarding the input information; an analysis unit configured to analyze the meta-information and specify a vibration type; a waveform storage unit configured to store the vibration type and vibration waveform data in association with each other; and an output control unit configured to cause an output unit to output a tactile stimulus corresponding to the vibration waveform data acquired from the waveform storage unit on the basis of the vibration type.

In addition, according to the present disclosure, there is provided an information processing system including: a transmission source apparatus including an output control unit configured to control display of a user interface regarding an application, and a communication unit configured to transmit input information that is inputted on the user interface and meta-information regarding the input information; and a reception apparatus including a communication unit configured to receive the input information and the meta-information, an analysis unit configured to analyze the meta-information and specify a vibration type, a waveform storage unit configured to store the vibration type and vibration waveform data in association with each other, and an output control unit configured to cause an output unit to output a tactile stimulus corresponding to the vibration waveform data acquired from the waveform storage unit on the basis of the vibration type.

### Advantageous Effects of Invention

According to the present disclosure as described above, it is possible to reduce effectively the data communication traffic in information communication regarding vibration.

Note that the effects described above are not necessarily limitative. With or in the place of the above effects, there may be achieved any one of the effects described in this specification or other effects that may be grasped from this specification.

### Brief Description of Drawings

FIG. 1A is a diagram illustrated to describe an increase in data communication traffic caused by communication using a vibration waveform.
FIG. 1B is a diagram illustrated to describe transmission and reception of meta-information according to an embodiment of the present disclosure.
FIG. 2 is a diagram illustrating a system configuration example of an information processing system according to the present embodiment.
FIG. 3 is an example of a functional block diagram of a transmission source apparatus according to the present embodiment.
FIG. 4 is an example of a functional block diagram of a reception apparatus according to the present embodiment.
FIG. 5 is a diagram illustrated to describe a vibration type specified by an analysis unit according to the present embodiment.
FIG. 6 is a diagram illustrating an example of a vibration type and vibration waveform data stored in a waveform storage unit according to the present embodiment.
FIG. 7 is a diagram illustrated to describe registration of vibration waveform data in a vibration DB and synchronization between the vibration DB and the waveform storage unit according to the present embodiment.
FIG. 8 is a diagram illustrated to describe a vibration type transmitted from a reception apparatus to a transmission source apparatus according to the present embodiment.
FIG. 9 is a diagram illustrated to describe control of output of a tactile stimulus based on output position information according to the present embodiment.
FIG. 10 is a diagram illustrated to describe control of output of a tactile stimulus to a specified vibration device according to the present embodiment.
FIG. 11 is a diagram illustrated to describe control of output of a tactile stimulus based on tap information according to the present embodiment.
FIG. 12 is a flowchart illustrating a procedure of control of output of a tactile stimulus by the reception apparatus according to the present embodiment.
FIG. 13 is a diagram illustrated to describe control of display of a user interface based on state estimation according to the present embodiment.
FIG. 14 is a diagram illustrating an example of state estimation by a state estimation unit according to the present embodiment.
FIG. 15 is a flowchart illustrating a procedure of control of output based on state estimation by the transmission source apparatus according to the present embodiment.
FIG. 16 is an example of hardware configuration according to the present disclosure.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Moreover, the description will be given in the following order.
1. Embodiment
1.1. Overview of embodiment
1.2. System configuration example
1.3. Functional configuration example of transmission source apparatus 10
1.4. Functional configuration example of reception apparatus 20
1.5. Details of control of output regarding tactile stimulus
1.6. Procedure of control of output of tactile stimulus by reception apparatus 20
1.7. Control of output based on state of transmission destination apparatus
1.8. Procedure of control of output based on state estimation by transmission source apparatus 10
2. Hardware configuration example
3. Concluding remarks

### <1.Embodiment>

### <<1.1. Overview of embodiment>>

An overview of an embodiment of the present disclosure is now described. As described above, various devices that generate vibration are used nowadays, and many vibration devices intended for mobile terminals are developed. Furthermore, a linear resonant actuator (LRA), a piezoelectric (voltage) actuator, or the like capable of reproducing various vibration patterns is also widespread nowadays, and so it is conceived that communication of vibration information would be actively progressed from now on.

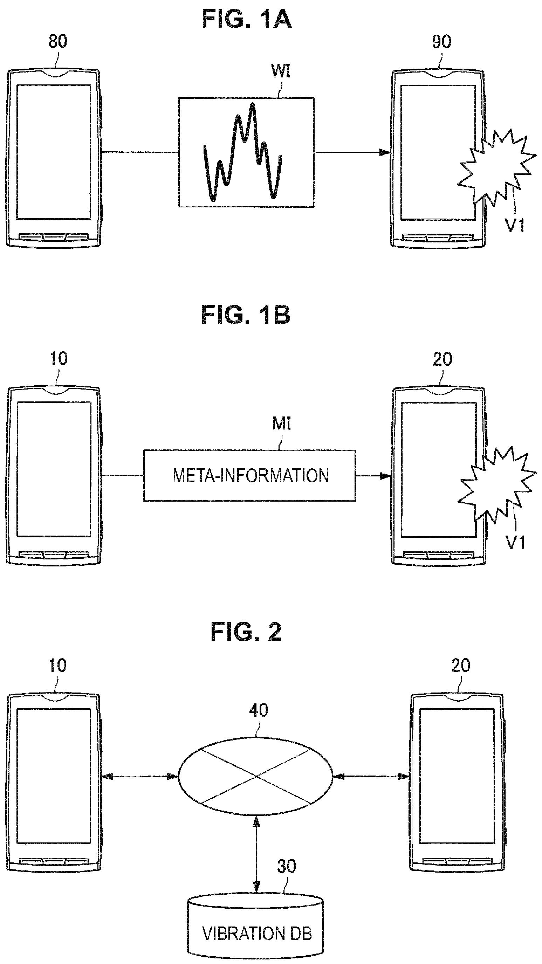

On the other hand, as described above, the wideband-vibration information is comparable to the amount of data equivalent to speech information, so in a case where communication of vibration information is performed, there is a problem that data communication traffic increases. FIG. 1A is a diagram illustrated to describe an increase in data communication traffic caused by communication using vibration waveforms. FIG. 1A illustrates an example of a case where vibration waveform data WI is directly transmitted and received between two information processing terminals 80 and 90. In FIG. 1A, the information processing terminal 90 outputs a tactile stimulus V1 on the basis of the received vibration waveform data WI. In this event, the vibration waveform data WI is also conceived to have the amount of data equivalent to speech waveform data, and particularly, vibration information probably transmitted and received in addition to picture information, speech information, or the like, can be a factor of placing a burden on data communication traffic.

The technical idea of the present embodiment is made by considering the points described above, and it is possible to prevent data communication traffic from being burdened by transmitting and receiving meta-information regarding vibration without directly transmitting and receiving vibration waveform data. FIG. 1B is a diagram illustrated to describe transmission and reception of meta-information according to the present embodiment. FIG. 1B illustrates an example of a case where a transmission source apparatus 10 transmits meta-information MI regarding vibration to a reception apparatus 20 according to the present embodiment.

Further, in this event, the reception apparatus 20 according to the present embodiment is capable of analyzing the received meta-information MI and specifying a vibration type corresponding to the meta-information MI. Furthermore, the reception apparatus 20 is capable of acquiring a vibration waveform associated with the specified vibration type from a waveform storage unit included therein to output the tactile stimulus V1 based on the vibration waveform.

As described above, in an information processing system according to the present embodiment, it is possible to reduce the data communication traffic by transmitting and receiving meta-information regarding vibration instead of vibration waveforms. Functions of an information processing apparatus, an information processing method, a program, and an information processing system according to the present embodiment and effects achieved from the functions are described below in detail.

### <<1.2. System configuration example>>

An example of system configuration of the information processing system according to the present embodiment is now described. FIG. 2 is a diagram illustrating an example of system configuration of the information processing system according to the present embodiment. Referring to FIG. 2, the information processing system according to the present embodiment can include a transmission source apparatus 10, a reception apparatus 20, and a vibration DB 30. In addition, connection between the transmission source apparatus 10 and the reception apparatus 20 and connection between the reception apparatus 20 and the vibration DB 30 are made via a network 40 so that they can communicate with each other.

### (Transmission source apparatus 10)

The transmission source apparatus 10 according to the present embodiment is an information processing apparatus that transmits meta-information regarding vibration to the reception apparatus 20. In this event, the transmission source apparatus 10 according to the present embodiment may transmit the meta-information described above to the reception apparatus 20, in one example, on the basis of an input operation or the like performed on a user interface regarding a message application or a game application. The transmission source apparatus 10 is capable of, in one example, on the basis of information regarding an object such as a stamp selected by the user on the user interface of a message application, transmitting meta-information corresponding to the object information to the reception apparatus 20.

For this reason, the transmission source apparatus 10 according to the present embodiment can be a smartphone, a tablet computer, a mobile phone, a personal computer (PC), a wearable device, or the like having a function of causing a message application, a game application, or the like to be operated.

### (Reception apparatus 20)

The reception apparatus 20 according to the present embodiment is an information processing apparatus that outputs a tactile stimulus on the basis of the meta-information transmitted from the transmission source apparatus 10. In this event, the reception apparatus 20 according to the present embodiment is capable of outputting the tactile stimulus, in one example, on the basis of the above-mentioned meta-information received through a message application, a game application, or the like. In addition, in this event, the reception apparatus 20 according to the present embodiment has one feature that outputs the above-mentioned tactile stimulus by acquiring vibration waveform data based on meta-information from a waveform storage unit included therein.

For this reason, the reception apparatus 20 according to the present embodiment can be implemented as a smartphone, a tablet, a mobile phone, a PC, or a wearable device, which has a function of causing a message application, a game application, or the like to be operated and is provided with a haptic device.

### (Vibration DB 30)

The vibration DB 30 according to the present embodiment is a database that stores the vibration type and the vibration waveform data in association with each other. The vibration waveform data stored in the vibration DB 30 is synchronized with the waveform storage unit included in the reception apparatus 20 in a regular or irregular manner or upon a request from the reception apparatus 20.

### (Network 40)

The network 40 has a function of connecting between the transmission source apparatus 10 and the reception apparatus 20 and between the reception apparatus 20 and the vibration DB 30. The network 40 may include the public line network such as the Internet, telephone line networks, and satellite communication networks, the various local area networks (LANs) and wide area networks (WANs) including Ethernet (registered trademark), or the like. In addition, the network 40 may include a leased line network such as Internt protocol-virtual private network (IP-VPN). In addition, the network 40 may include a wireless communication network such as Wi-Fi (registered trademark) and Bluetooth (registered trademark).

The configuration example of the information processing system according to the present embodiment is described above. Moreover, the above description with reference to FIG. 2 is given of the case where the information processing system according to the present embodiment includes the transmission source apparatus 10, the reception apparatus 20, and the vibration DB 30 as an example. However, the configuration example of the information processing system according to the present embodiment is not limited to this example. The information processing system according to the present embodiment may include, in one example, an information processing server or the like that mediates communication between the transmission source apparatus 10 and the reception apparatus 20. In this case, some of functions of the transmission source apparatus 10 or the reception apparatus 20 may be implemented as functions of the information processing server. The configuration of the information processing system according to the present embodiment can be modified flexibly depending on the system specification and operation, the nature of information to be handled, the amount of data, or the like.

### <<1.3. Functional configuration example of transmission source apparatus 10>>

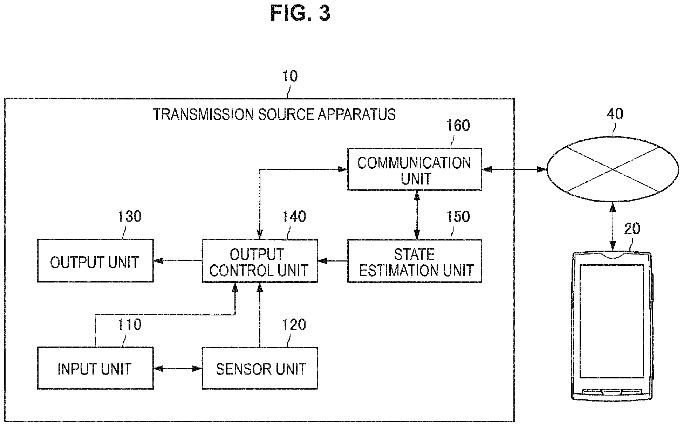

A functional configuration example of the transmission source apparatus 10 according to the present embodiment is now described. FIG. 3 is an example of a functional block diagram of the transmission source apparatus 10 according to the present embodiment. Referring to FIG. 3, the transmission source apparatus 10 according to the present embodiment includes an input unit 110, a sensor unit 120, an output unit 130, an output control unit 140, a state estimation unit 150, and a communication unit 160.

### (Input unit 110)

The input unit 110 has a function of recognizing an input operation by the user. The input unit 110 according to the present embodiment is particularly capable of recognizing an input operation by the user on the user interface of an application. In one example, the input unit 110 according to the present embodiment may recognize character information, picture information, object information, speech information, or the like that is inputted by the user on the user interface.

To this end, the input unit 110 according to the present embodiment may include various devices, sensors, or the like that are used to detect an input operation by the user. The input unit 110 can include, in one example, various buttons, a keyboard, a touch panel, a mouse, a switch, or the like. In addition, the input unit 110 may include a microphone or the like for detecting user's utterance or the like.

### (Sensor unit 120)

The sensor unit 120 has a function of collecting various pieces of sensor information regarding the state of the transmission source apparatus 10. The sensor unit 120 according to the present embodiment can include, in one example, an acceleration sensor, a gyro sensor, a geomagnetic sensor, an imaging sensor, a global positioning system (GPS), a clock, or the like. Moreover, the sensor unit 120 according to the present embodiment may use a sound collector such as a microphone with the input unit 110 in common. In other words, the sensor information according to the present embodiment may include speech information.

### (Output unit 130)

The output unit 130 has a function of outputting various pieces of information under the control of the output control unit 140. In particular, the output unit 130 according to the present embodiment may have a function of displaying a user interface regarding an application. In addition, the information that is outputted by the output unit 130 can include auditory information, tactile information, or the like in addition to visual information.

To this end, the output unit 130 according to the present embodiment includes, in one example, a cathode ray tube (CRT) display device, a liquid crystal display (LCD) device, an organic light emitting diode (OLED) device, a touch panel, or the like.

Further, the output unit 130 includes, in one example, an audio output amplifier, a loudspeaker, or the like. Moreover, the output unit 130 according to the present embodiment may include a plurality of loudspeakers that support stereo reproduction.

Further, the output unit 130 includes a vibration device such as LRA, piezoelectric actuator, eccentric motor, or the like, and an integrated circuit (IC) that drives the vibration device. Moreover, the output unit 130 according to the present embodiment may include a plurality of vibration devices.

### (Output control unit 140)

The output control unit 140 has a function of controlling information output by the output unit 130. In particular, the output control unit 140 according to the present embodiment is capable of controlling display of the user interface regarding an application. In this event, the output control unit 140 according to the present embodiment may control display of the user interface on the basis of the state of a transmission destination terminal, that is, the reception apparatus 20. Details of the functions of the output control unit 140 according to the present embodiment will be described later separately.

### (State estimation unit 150)

The state estimation unit 150 has a function of estimating the state of the reception apparatus 20 on the basis of environmental information received from the reception apparatus 20. Here, the environmental information according to the present embodiment may include various pieces of information regarding external or internal environment of the reception apparatus 20. More specifically, the environmental information according to the present embodiment includes, in one example, sensor information, position information, user schedule information, application running information, incoming call setting information including a manner mode or the like, and the like. Details of the functions of the state estimation unit 150 according to the present embodiment will be described later separately.

### (Communication unit 160)

The communication unit 160 has a function of performing information communication with the reception apparatus 20. Specifically, the communication unit 160 according to the present embodiment transmits input information or meta-information that is inputted by the user on the user interface regarding an application to the reception apparatus 20. In addition, the communication unit 160 receives the environmental information from the reception apparatus 20.

The functional configuration example of the transmission source apparatus 10 according to the present embodiment is described above. Moreover, the functional configuration described above with reference to FIG. 3 is merely an example, and the functional configuration of the transmission source apparatus 10 according to the present embodiment is not limited to this example. The transmission source apparatus 10 according to the present embodiment may further include a configuration other than those mentioned above and a part of the functions of the transmission source apparatus 10 may be implemented as functions of an information processing server installed separately therefrom. The functional configuration of the transmission source apparatus 10 according to the present embodiment can be flexibly modified.

### <<1.4. Functional configuration example of reception apparatus 20>>

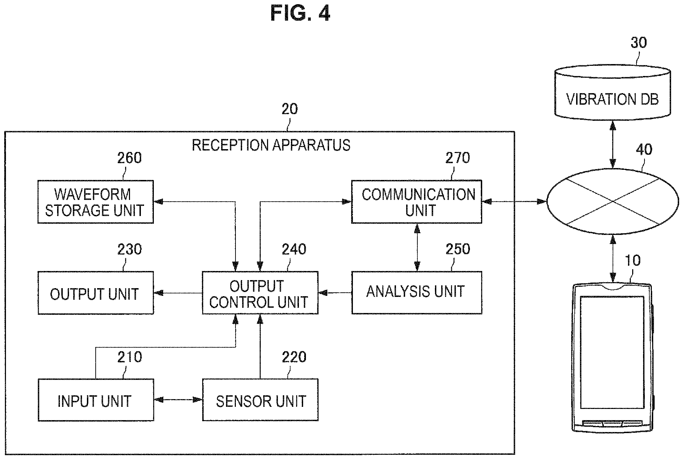

A functional configuration example of the reception apparatus 20 according to the present embodiment is now described. FIG. 4 is an example of a functional block diagram of the reception apparatus 20 according to the present embodiment. Referring to FIG. 4, the reception apparatus 20 according to the present embodiment includes an input unit 210, a sensor unit 220, an output unit 230, an output control unit 240, an analysis unit 250, a waveform storage unit 260, and a communication unit 270. Here, the input unit 210, the sensor unit 220, and the output unit 230 described above may have substantially the same configuration as the input unit 110, the sensor unit 120, and the output unit 130 of the transmission source apparatus 10, respectively, so their detailed description is omitted.

### (Output control unit 240)

The output control unit 240 has a function of controlling output of information by the output unit 230. In particular, the output control unit 240 according to the present embodiment has a function of causing the output unit 230 to output a tactile stimulus corresponding to vibration waveform data acquired from the waveform storage unit 260 on the basis of a vibration type specified by the analysis unit 250. In addition, in a case where the vibration waveform data associated with the vibration type is not stored in the waveform storage unit 260, the output control unit 240 may acquire the vibration waveform data from the vibration DB 30 on the basis of the vibration type. Details of the functions of the output control unit 240 according to the present embodiment will be described later separately.

### (Analysis unit 250)

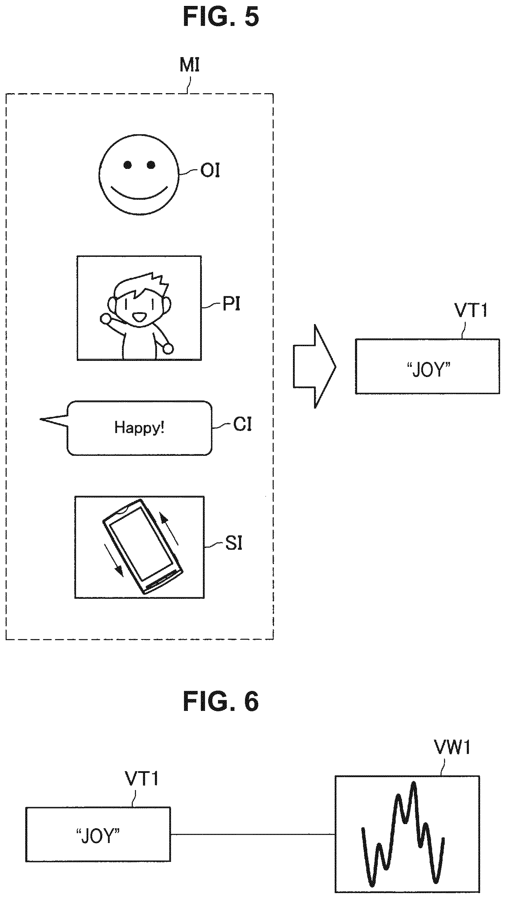

The analysis unit 250 has a function of analyzing the meta-information received by the communication unit 270 and specifying a vibration type. In this event, the analysis unit 250 according to the present embodiment may analyze object information, picture information, character information, sensor information, or the like included in the meta-information to specify the vibration type. FIG. 5 is a diagram illustrated to describe the vibration type specified by the analysis unit 250 according to the present embodiment.

As illustrated in FIG. 5, the meta-information MI according to the present embodiment may include object information OI regarding an object selected on the user interface of the transmission source apparatus 10. The analysis unit 250 according to the present embodiment is capable of specifying a vibration type VT1 on the basis of the object information OI. Here, the object according to the present embodiment includes a stamp or the like selected by the user of the transmission source apparatus 10. In addition, the object information OI may include an ID, tag information, a category, or the like of the object. The analysis unit 250 according to the present embodiment is capable of specifying the vibration type VT1 by reading the above-mentioned ID or tag information. In the example illustrated in FIG. 5, the analysis unit 250 specifies the vibration type VT1 corresponding to "joy" from the object information OI. In this manner, the vibration type according to the present embodiment may correspond to the type of emotion or the like.

Further, as illustrated in FIG. 5, the meta-information MI according to the present embodiment may include picture information PI selected on the user interface of the transmission source apparatus 10. The analysis unit 250 according to the present embodiment is capable of analyzing the picture information PI and specifying the vibration type VT1. In this event, the analysis unit 250 may perform estimation of emotion by employing widely used image recognition technology or the like. In addition, the analysis unit 250 may recognize and analyze a character such as onomatopoeia contained in the picture information PI.

Further, as illustrated in FIG. 5, the meta-information MI according to the present embodiment may include character information CI that is inputted on the user interface of the transmission source apparatus 10. The analysis unit 250 according to the present embodiment is capable of analyzing the character information CI and specifying the vibration type VT1. In this event, the analysis unit 250 may perform estimation of emotion by performing intention interpretation for the character information CI. In addition, the character information CI according to the present embodiment may include information obtained by converting utterance from a user who handles the transmission source apparatus 10 into a text.

Further, as illustrated in FIG. 5, the meta-information MI according to the present embodiment may include sensor information SI collected by the transmission source apparatus 10. The analysis unit 250 according to the present embodiment is capable of analyzing the sensor information SI and specifying the vibration type VT1. In one example, the analysis unit 250 may estimate that the user of the transmission source apparatus 10 is joyful or the like on the basis of the fact that acceleration information included in the sensor information SI indicates the rapid exercise of the transmission source apparatus 10. In addition, the sensor information SI according to the present embodiment also includes information such as the contact position, strength of contact, moving speed, or the like of an operating portion on the touch panel.

As described above, the analysis unit 250 according to the present embodiment has a function of specifying the vibration type on the basis of the meta-information received from the transmission source apparatus 10. In addition, the meta-information according to the present embodiment may include the object information, the picture information, the character information, the sensor information, or the like. According to the above-mentioned functions of the analysis unit 250 according to the present embodiment, it is possible to specify the vibration type without directly communicating the vibration waveform data, thereby reducing the data communication traffic.

### (Waveform storage unit 260)

The waveform storage unit 260 has a function of storing the vibration type and the vibration waveform data in association with each other. FIG. 6 is a diagram illustrating an example of the vibration type and the vibration waveform data stored in the waveform storage unit according to the present embodiment. FIG. 6 illustrates the vibration type VT1 and vibration waveform data VW1 stored in the waveform storage unit 260. In this manner, the vibration waveform data and the vibration type in association with each other stored in the waveform storage unit 260 according to the present embodiment makes it possible to implement communication accompanying the vibration output without communication of vibration waveform data each time.

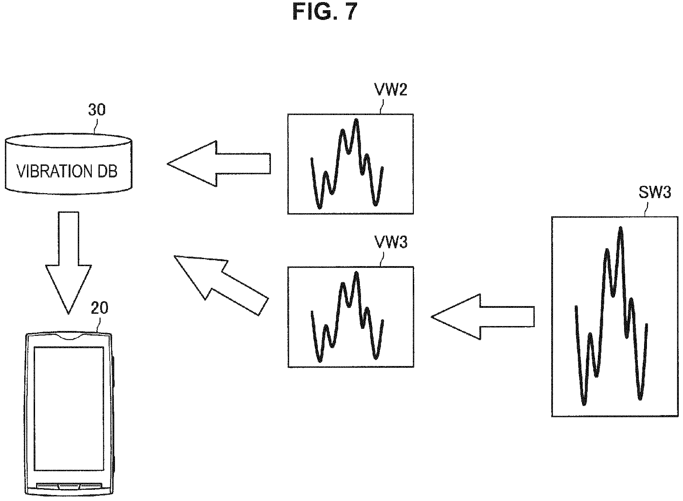

Further, the vibration type and the vibration waveform data stored in the waveform storage unit 260 may be synchronized with the vibration DB 30 in a regular or irregular manner or upon a request. FIG. 7 is a diagram illustrated to describe registration of the vibration waveform data in the vibration DB 30 and synchronization between the vibration DB 30 and the waveform storage unit 260 according to the present embodiment. FIG. 7 illustrates vibration waveform data VW2 created by a creator or the like and vibration waveform data VW3 generated on the basis of speech waveform data SW3. Here, the speech waveform data SW3 may be speech waveform data regarding sound effect that represents, in one example, "joy", and the vibration waveform data VW3 may be vibration waveform data generated by processing the speech waveform data SW3 with a low-pass filter. In this manner, the generated vibration waveform data is added each time to the vibration DB 30 according to the present embodiment.

In this event, the waveform storage unit 260 of the reception apparatus 20 may check the difference from the vibration DB 30 in a regular or irregular manner and may download new vibration waveform data. In addition, the waveform storage unit 260 may download the relevant vibration waveform data from the vibration DB 30, in one example, on the basis of the purchase procedure of vibration waveform data by the user of the reception apparatus 20. In addition, as described above, in a case where the relevant vibration waveform data is not stored in the waveform storage unit 260, the output control unit 240 according to the present embodiment acquires the vibration waveform data from the vibration DB 30. In this case, the waveform storage unit 260 may newly store the vibration waveform data acquired by the output control unit 240.

### (Communication unit 270)

The communication unit 270 has a function of performing information communication with the transmission source apparatus 10 or the vibration DB 30. Specifically, the communication unit 270 according to the present embodiment receives input information that is inputted on the user interface displayed on the transmission source apparatus 10 and meta-information regarding the relevant input information. In addition, the communication unit 270 transmits environmental information collected by the sensor unit 220 or the like to the transmission source apparatus 10.

The functional configuration example of the reception apparatus 20 according to the present embodiment is described above. Moreover, the functional configuration described above with reference to FIG. 4 is merely an example, and the functional configuration of the reception apparatus 20 according to the present embodiment is not limited to this example. The reception apparatus 20 according to the present embodiment may further include a configuration other than those mentioned above.

Further, a part of the functions of the reception apparatus 20 may be implemented as a function of the transmission source apparatus 10. In one example, the analysis unit 250 can be implemented as a function of the transmission source apparatus 10. In this case, the reception apparatus 20 is capable of receiving a vibration type specified by the transmission source apparatus 10, thereby outputting vibration corresponding to the relevant vibration type.

Further, in a case where an information processing server that mediates information communication between the transmission source apparatus 10 and the reception apparatus 20 is installed, the analysis unit 250 or the output control unit 240 may be implemented as a function of the information processing server. The reception apparatus 20 is capable of receiving the vibration type or various control signals from the information processing server, thereby implementing the above-mentioned function.

Further, although the above description is given of the functions of the transmission source apparatus 10 and the functions of the reception apparatus 20 are described separately for the convenience of description, the transmission source apparatus 10 and the reception apparatus 20 may have the configuration described above in common. In other words, the transmission source apparatus 10 according to the present embodiment may also serve as the reception apparatus, and the reception apparatus 20 according to the present embodiment may also serve as the transmission source apparatus.

### <<1.5. Details of control of output regarding tactile stimulus>>

Details of control of output regarding a tactile stimulus of the present embodiment are now described. As described above, the analysis unit 250 according to the present embodiment is capable of analyzing the meta-information transmitted from the transmission source apparatus 10 to specify the vibration type. In addition, the output control unit 240 according to the present embodiment is capable of acquiring the vibration waveform data associated with the vibration type specified by the analysis unit 250 from the waveform storage unit 260 and causing the output unit 230 to output the tactile stimulus based on the vibration waveform data.

In this event, the output control unit 240 may cause the output unit 230 to output a tactile stimulus, in one example, when a message application receives a message from the transmission source apparatus 10. In this case, it is also possible for the user of the reception apparatus 20 to predict contents of the message only with the tactile stimulus without checking the message even in a case where the reception apparatus 20 is located in a user's pocket or the like.

Further, the output control unit 240 may cause the output unit 230 to output a tactile stimulus, in one example, when the user of the reception apparatus 20 unlocks an application screen. In addition, in this event, in a case where a plurality of messages are accumulated, the output control unit 240 may cause only the tactile stimulus regarding the latest message to be outputted or cause the tactile stimulus to be outputted in the order of messages. In this case, it is possible for the user of the reception apparatus 20 to receive presentation of the tactile stimulus only in a case where the user intends to check the message, thereby enjoying the tactile stimulus with higher sensitivity.

Further, the output control unit 240 is capable of causing the output unit 230 to output the tactile stimulus only in a case where a message is received while the user of the reception apparatus 20 is opening the application. In this case, it is possible for the user of the reception apparatus 20 to enjoy communication of the tactile stimulus in real time and with high realistic sensation.

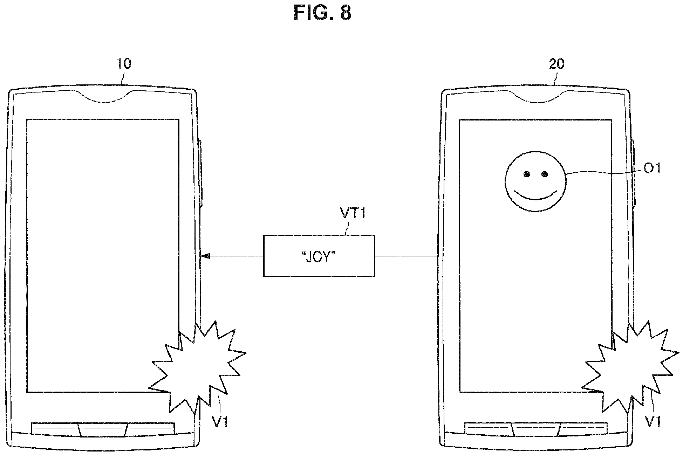

Furthermore, the communication unit 270 according to the present embodiment may transmit information regarding the vibration type specified by the analysis unit 250 to the transmission source apparatus 10. FIG. 8 is a diagram illustrated to describe a vibration type transmitted from the reception apparatus 20 to the transmission source apparatus 10. Referring to FIG. 8, the reception apparatus 20, after outputting an object O1 on the user interface on the basis of the input information transmitted from the transmission source apparatus 10, specifies the vibration type VT1 on the basis of meta-information regarding the object O1 and outputs the tactile stimulus V1 corresponding to the vibration type VT1.

Further, in this event, the communication unit of the reception apparatus 20 transmits the vibration type VT1 specified by the analysis unit 250 to the transmission source apparatus 10. The transmission source apparatus 10 outputs the tactile stimulus V1 corresponding to the received vibration type VT1. In this case, the transmission source apparatus 10 may further include a configuration comparable to the waveform storage unit 260.

As described above, the reception apparatus 20 according to the present embodiment is capable of transmitting information regarding the specified tactile type to the transmission source apparatus 10, thereby feeding back the information regarding the tactile stimulus to be outputted to the transmission source apparatus 10. In this case, the user of the transmission source apparatus 10 is able to know what kind of a tactile stimulus is outputted or has been outputted from the transmission destination apparatus, that is, the reception apparatus 20 on the basis of transmission of the user's own message.

Further, as described above, the transmission source apparatus 10 according to the present embodiment may include a configuration comparable to the analysis unit 250. In this case, the output control unit 140 of the transmission source apparatus 10 is capable of outputting a tactile stimulus based on the vibration type, in one example, on a review screen regarding the message transmission. According to the above function, the user of the transmission source apparatus 10 is able to check the tactile stimulus to be outputted in advance before actual transmission of the message. In addition, in a case where a tactile stimulus is outputted upon review, the output control unit 140 may perform control so that the tactile stimulus is prevented from being outputted even in a case where the information regarding the vibration type is received from the reception apparatus 20.

Further, the output control unit 240 of the reception apparatus 20 and the output control unit 140 of the transmission source apparatus 10 may cause the tactile stimulus to be outputted when the user selects a message by tapping or the like on the user interface. The output timing of the tactile stimulus according to the present embodiment may be designed appropriately depending on the characteristics or the like of an application, or may be controlled depending on the user's setting or the like.

Further, the output control unit 240 according to the present embodiment may perform control of output of a tactile stimulus to a decided output position. In this event, the meta-information according to the present embodiment may include output position information. In addition, the output position information may be information that is set in advance in an object or the like, or may be information that is specified by the user of the transmission source apparatus 10. The output control unit 240 is capable of controlling output of the tactile stimulus by the output unit 230 based on the above-mentioned output position information.

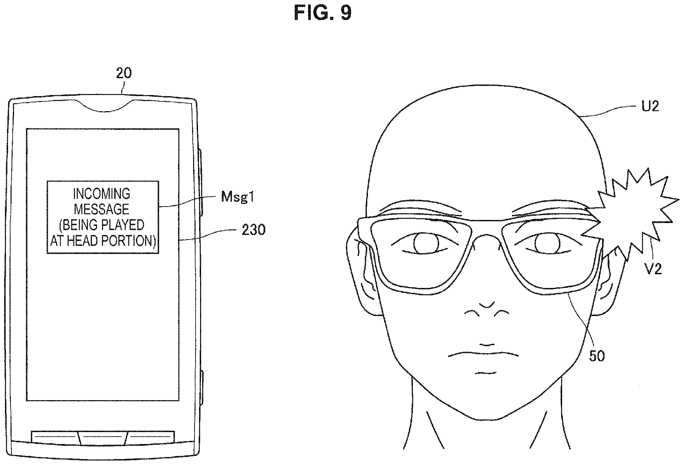

FIG. 9 is a diagram illustrated to describe control of output of the tactile stimulus based on the output position information according to the present embodiment. On the left side of FIG. 9, notice AL1 that is outputted to the output unit 130 of the reception apparatus 20 is shown. Here, the notice AL1 may include a wording indicating that the tactile stimulus regarding the received message is played at the head portion. In this manner, the output control unit 240 according to the present embodiment is capable of specifying a position to output the tactile stimulus on the basis of the output position information included in the meta-information and causing to the output unit 130 to output the notice AL1. Moreover, the example of FIG. 9 shows the case where the output control unit 240 causes the notice AL1 to be outputted before opening the message. However, the output control unit 240 is also capable of giving the notice as described above, in one example, during playback or the like of a moving image.

Further, a wearable device 50 attached to a user U2 of the reception apparatus 20 and a tactile stimulus V2 that is outputted by an output unit of the wearable device 50 are shown on the right side of FIG. 9. In this manner, the output control unit 240 is capable of determining an output unit to output the tactile stimulus on the basis of the output position information and causing the tactile stimulus to be outputted. In addition, in this event, the output unit to be controlled by the output control unit 240 is not limited to the output unit 230 of the reception apparatus 20, but may be an output unit included in the wearable device 50 or various information processing terminals as illustrated in FIG. 9. The output control unit 240 is capable of determining whether or not the attachment thereto is made on the basis of the information received from the wearable device 50 connected via wireless communication or the like.

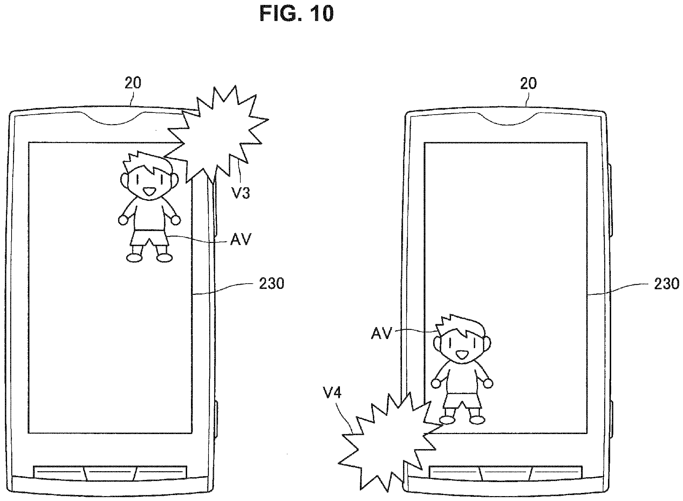

Further, the output control unit 240 according to the present embodiment may cause a particular vibration device among a plurality of vibration devices provided in the output unit 230 of the reception apparatus 20 to output the tactile stimulus on the basis of the output position information. FIG. 10 is a diagram illustrated to describe control of output of a tactile stimulus to the specified vibration device according to the present embodiment.

On the left side of FIG. 10, an avatar AV that is outputted to the output unit 230 of the reception apparatus 20 and a tactile stimulus V3 are shown. Here, the avatar AV may be, in one example, a graphical image or the like which is a substitute for the user of the transmission source apparatus 10 in a game application or the like. In this event, the output control unit 240 according to the present embodiment may determine a vibration device that outputs the tactile stimulus V3 depending on the output position of the avatar AV. In the example illustrated in FIG. 10, the output control unit 240 causes the avatar AV to be displayed on the upper right of the screen and causes a vibration device built in the upper right as viewed facing the reception apparatus 20 to output the tactile stimulus V3.

Further, similarly, the avatar AV that is outputted to the output unit 230 of the reception apparatus 20 and tactile stimulus V4 are shown on the right side of FIG. 10. In this case, the output control unit 240 causes the avatar AV to be displayed on the lower left of the screen and causes a vibration device built in the lower left as viewed facing the reception apparatus 20 to output the tactile stimulus V4. In this manner, in a case where the output unit 230 has a plurality of vibration devices, the output control unit 240 according to the present embodiment may cause the tactile stimulus to be outputted only to a vibration device corresponding to the output position information. The above-mentioned function of the output control unit 240 according to the present embodiment makes it possible to present the user with a more realistic tactile stimulus linked with the visual information.

Further, the output position information according to the present embodiment may include tap information. In this case, the output control unit 240 according to the present embodiment is capable of controlling output of the tactile stimulus by the output unit 230 on the basis of the tap information.

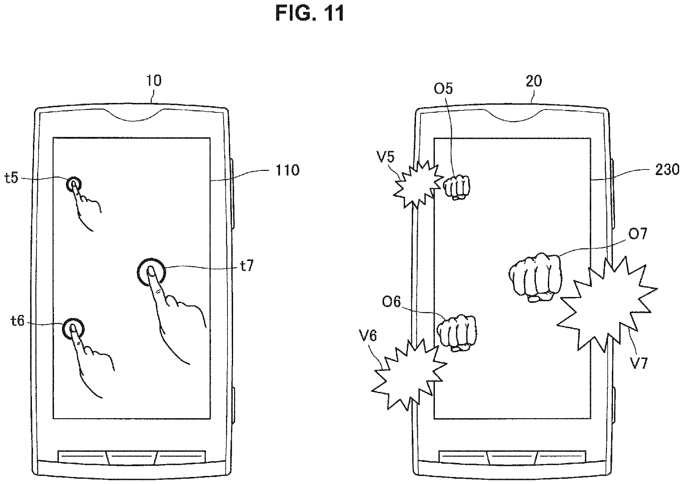

FIG. 11 is a diagram illustrated to describe control of output of a tactile stimulus based on tap position information according to the present embodiment. On the left side of FIG. 11, user's taps t5 to t7 on the input unit 110 of the transmission source apparatus 10 are shown. Here, the intensity of each of the taps t5 to t7 may be proportional to the size of an image.

Further, on the right side of FIG. 11, objects O5 to O7 that are outputted to the output unit 230 of the reception apparatus 20 and tactile stimuli V5 to V7 are shown. Here, the objects O5 to O7 and the tactile stimuli V5 to V7 may be visual information and tactile stimuli that are respectively outputted corresponding to the taps t5 to t7. In other words, the output control unit 240 according to the present embodiment is capable of causing the objects O5 to O7 to be displayed at the positions respectively corresponding to the taps t5 to t7 on the basis of received tap information of the taps t5 to t7. In addition, the output control unit 240 is capable of causing vibration devices built in positions close to the taps t5 to t7 to output the tactile stimuli V5 to V7 on the basis of the tap information of the taps t5 to t7.

Further, in this event, the output control unit 240 is capable of controlling the size of the objects O5 to O7 and the intensity of the tactile stimuli V5 to V7 on the basis of intensity of each of the taps t5 to t7. The above-mentioned functions of the output control unit 240 according to the present embodiment make it possible to implement haptic communication with high realistic sensation.

### <<1.6. Procedure of control of output of tactile stimulus by reception apparatus 20>>

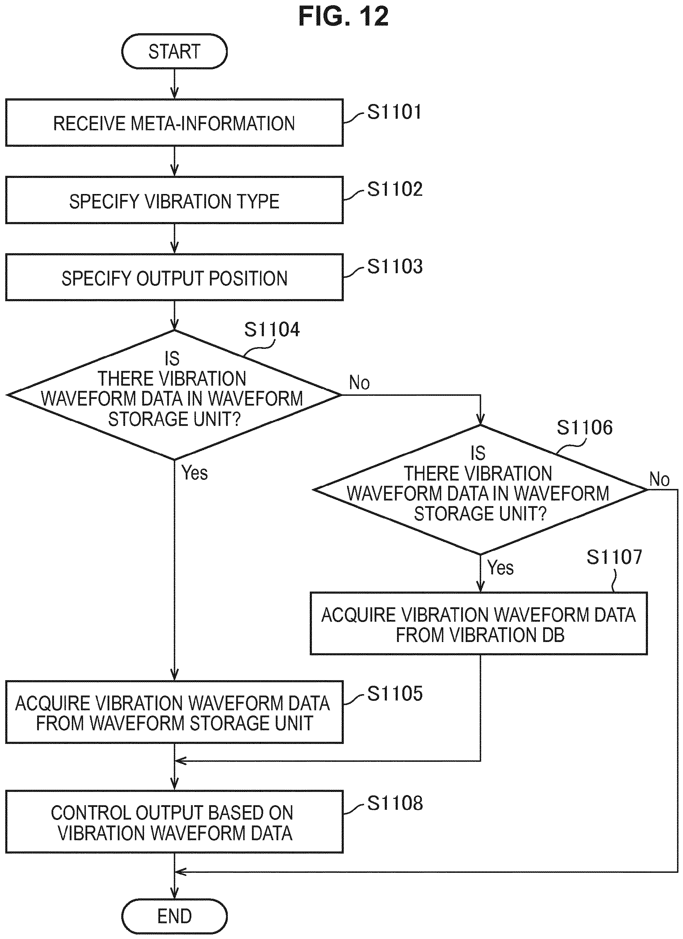

The procedure of control of output of the tactile stimulus by the reception apparatus 20 according to the present embodiment is now described. FIG. 12 is a flowchart illustrating the procedure of control of output of the tactile stimulus by the reception apparatus 20 according to the present embodiment.

Referring to FIG. 12, the communication unit 270 of the reception apparatus 20 initially receives meta-information from the transmission source apparatus 10 (S1101).

Then, the analysis unit 250 specifies a vibration type on the basis of the meta-information received in step S1101 (S1102).

Then, the output control unit 240 specifies an output position of a tactile stimulus on the basis of the meta-information received in step S1101 (S1103).

Then, the output control unit 240 attempts to acquire vibration waveform data associated with the vibration type specified in step S1102 from the waveform storage unit 260. Here, in a case where there is relevant vibration waveform data in the waveform storage unit 260 (Yes in S1104), the output control unit 240 acquires the vibration waveform data from the waveform storage unit 260 (S1105).

On the other hand, in a case where there is no relevant vibration waveform data in the waveform storage unit 260 (No in S1104), the output control unit 240 attempts to acquire the vibration waveform data associated with the vibration type from the vibration DB 30. Here, in a case where there is relevant vibration waveform data in the vibration DB 30 (Yes in S1106), the output control unit 240 acquires the vibration waveform data from the vibration waveform DB 30 (S1107). On the other hand, in a case where there is no relevant vibration waveform data in the vibration DB 30 (No in S1106), the output control unit 240 terminates the processing regarding the control of output of the tactile stimulus.

In a case where the vibration waveform data is acquired in step S1105 or S1107, the output control unit 240 performs the control of output of the tactile stimulus based on the acquired vibration waveform data (S1108).

### <<1.7. Control of output based on state of transmission destination apparatus>>

The control of output of the tactile stimulus according to the present embodiment is described above in detail. Then, the control of output based on the state of a transmission destination apparatus, that is, the reception apparatus 20 by the output control unit 140 of the transmission source apparatus 10 according to the present embodiment is now described in detail.

As described above, the state estimation unit 150 of the transmission source apparatus 10 according to the present embodiment is capable of estimating the state of the reception apparatus 20 on the basis of the environmental information transmitted by the transmission destination apparatus, that is, the reception apparatus 20. In addition, the output control unit 140 according to the present embodiment is capable of controlling display of the user interface regarding the application on the basis of the state of the reception apparatus 20 that is estimated by the state estimation unit 150.

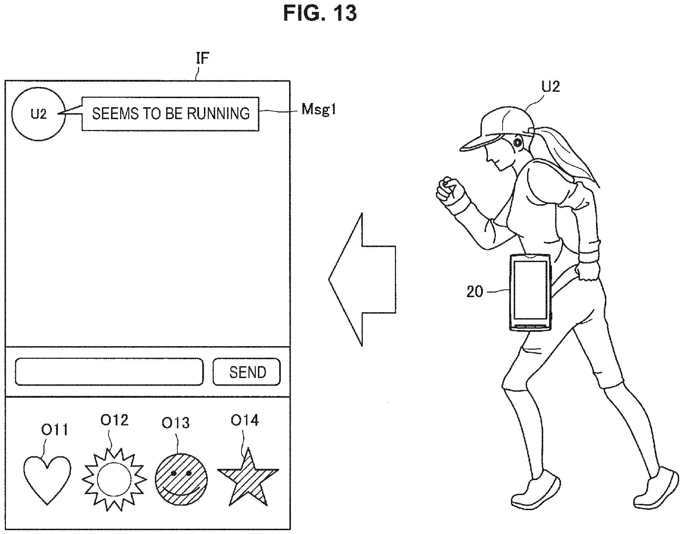

FIG. 13 is a diagram illustrated to describe control of display of the user interface based on the state estimation according to the present embodiment. Here, on the right side of FIG. 13, a running user U2 who holds the reception apparatus 20 is shown, and a user interface IF to be outputted to the output unit 130 of the transmission source apparatus 10 is shown on the left side of FIG. 13.

In this event, the state estimation unit 150 according to the present embodiment is capable of estimating that the user U2 is running on the basis of acceleration information or the like collected by the sensor unit 120 of the reception apparatus 20. In addition, the output control unit 140 is capable of performing control of various types of display based on the state of the reception apparatus 20 that is estimated by the state estimation unit 150.

In one example, the output control unit 140 may control selectability of an object on the user interface on the basis of the state of the reception apparatus 20 that is estimated by the state estimation unit 150. In the example illustrated in FIG. 13, the output control unit 140 performs control of display so that objects O13 and O14 is prevented from being selected on the basis of the fact that the reception apparatus 20 is estimated to be in an exercise state.

Here, objects O11 and O12 illustrated in FIG. 13 may be objects that are not accompanied with output of tactile stimulus, and the objects O13 and O14 may be objects that are accompanied with output of tactile stimulus. In other words, in the case where the reception apparatus 20 is in the exercise state, the user U2 is less likely to perceive the relevant tactile stimulus even in the case where the tactile stimulus is outputted. Thus, the output control unit 140 according to the present embodiment controls so that the objects O13 and O14 that are accompanied with the tactile stimulus are prevented from being selected.

Further, the state estimation unit 150 is also capable of estimating the communication state or the like between the reception apparatus 20 and its peripheral device from the environmental information. In this case, the output control unit 140 is capable of performing control, in one example, so that an object corresponding to the tactile stimulus that can be outputted by a wearable device connected to the reception apparatus 20 is displayed.

Further, the output control unit 140 may cause information regarding the state of a transmission destination apparatus, i.e., the reception apparatus 20 that is estimated by the state estimation unit 150 to be displayed on the user interface. In the example illustrated in FIG. 13, the output control unit 140 causes a message Msg1 together with an icon representing the user U2 to be displayed. Here, the message Msg1 may be a message indicating that the user U2 is in the exercise state. The user of the transmission source apparatus 10 is able to know the states of the user U2 and the reception apparatus 20 by checking the message as described above.

Further, the above description with reference to FIG. 13 is given of the case where the state estimation unit 150 estimates the exercise state of the reception apparatus 20 on the basis of the environmental information as an example. However, the state estimation unit 150 according to the present embodiment is capable of estimating various states regarding the reception apparatus 20 in addition to the exercise state. In one example, the state estimation unit 150 according to the present embodiment is capable of estimating a gripping state, an installation state, a manner state, or the like of the transmission destination apparatus, that is, the reception apparatus 20 on the basis of the environmental information.

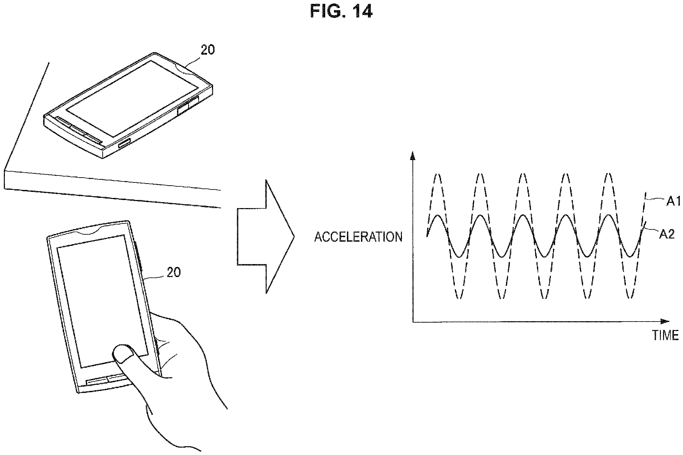

FIG. 14 is a diagram illustrating an example of state estimation by the state estimation unit 150 according to the present embodiment. On the left side of FIG. 14, the reception apparatus 20 installed on the desk and the reception apparatus 20 gripped by the user are shown. In this event, the state estimation unit 150 according to the present embodiment is capable of estimating an installation state and a gripping state, in one example, on the basis of acceleration information included in the environmental information received from the reception apparatus 20. On the right side of FIG. 14, an example of the acceleration information transmitted from the reception apparatus 20 is shown. Here, a curve A1 may be acceleration information collected in a state where the reception apparatus 20 is not gripped, and a curve A2 may be acceleration information collected when the reception apparatus 20 is in the gripping state.

In this event, in the case where the reception apparatus 20 is in the gripping state, the state estimation unit 150 may estimate the gripping state on the basis of a phenomenon in which vibration decreases. Specifically, the state estimation unit 150 initially stores the shake (acceleration information) when the tactile stimulus is outputted in the state where the reception apparatus 20 is not gripped. Then, the state estimation unit 150 may detect vibration and shaking in a regular or irregular manner, and may estimate that the reception apparatus 20 is in the gripping state in a case where shaking values decrease. In addition, the state estimation unit 150 may estimate that the reception apparatus 20 is in the installation state in a case where the state in which the shake value is equal to or less than a predetermined value continues.

Further, the state estimation unit 150 according to the present embodiment may estimate the state of the reception apparatus 20 on the basis of environmental information other than the acceleration information. In one example, the state estimation unit 150 is capable of estimating the state of the reception apparatus 20 on the basis of information regarding the manner mode, position information, schedule information, another application running information, and the like that are received from the reception apparatus 20. In addition, the output control unit 140 may perform control of various types of output based on the state of the reception apparatus 20 that is estimated by the state estimation unit 150.

In one example, in a case where the state estimation unit 150 estimates that the user of the reception apparatus 20 is unable to accept incoming calls, the output control unit 140 may perform control of output so that the user of the transmission source apparatus 10 is notified of this situation, or may perform control of output so that the input accompanied with the tactile stimulus is prevented from being performed.

Further, the output control unit 140 is also capable of performing control regarding the tactile stimulus to be outputted from the reception apparatus 20 in addition to the control of display. In one example, the output control unit 140 is also capable of generating the meta-information so that a tactile stimulus having higher strength than the normal time is outputted on the basis of the fact that the reception apparatus 20 is estimated to be in the exercise state.

Further, the output control unit 140 is also capable of generating the meta-information used to output a tactile stimulus for allowing the user to recognize incoming calls, independent of the history of a message application, on the basis of the fact that the state estimation unit 150 estimates that the user is in a state difficult to recognize incoming calls such as a case of exercise state.

The control of output based on the state of the transmission destination apparatus according to the present embodiment is described above in detail. As described above, the output control unit 140 according to the present embodiment is capable of performing control of various types of output based on the state of the reception apparatus 20 that is estimated by the state estimation unit 150. The above-mentioned functions of the output control unit 140 according to the present embodiment make it possible to implement haptic communication in consideration of the state of a partner of the transmission destination.

Further, as described above, the reception apparatus 20 according to the present embodiment may have the functions of the transmission source apparatus 10 in common. In other words, the output control unit 240 of the reception apparatus 20 according to the present embodiment may have the function equivalent to the output control unit 140 described above.

Further, as described above, the information processing system according to the present embodiment may include an information processing server that mediates information communication between the transmission source apparatus 10 and the reception apparatus 20. In this case, the information processing server include the configuration comparable to the state estimation unit 150 or the output control unit 140 described above, so it is possible to estimate the state of the transmission source apparatus 10 or the reception apparatus 20 and perform control of various types of output based on the relevant state.

### <<1.8. Procedure of control of output based on state estimation by transmission source apparatus 10>>

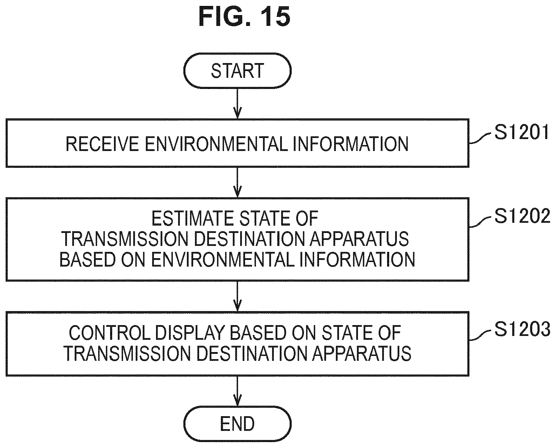

The procedure of the control of output based on the state estimation by the transmission source apparatus 10 according to the present embodiment is now described. FIG. 15 is a flowchart illustrating the procedure of the control of output based on the state estimation by the transmission source apparatus 10 according to the present embodiment.

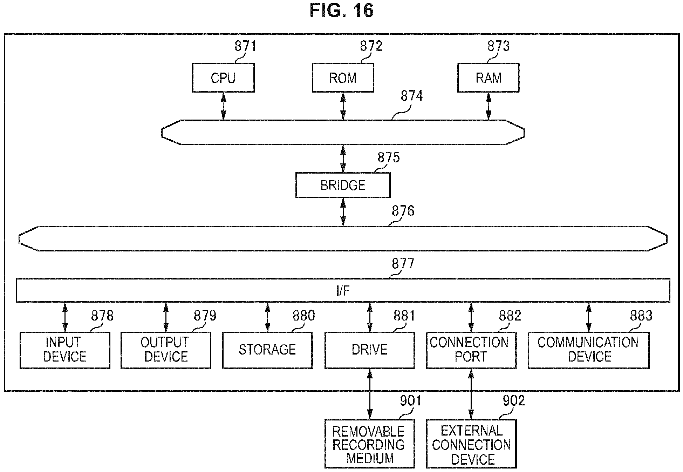

Referring to FIG. 16, the communication unit 160 of the transmission source apparatus 10 initially receives environmental information from the transmission destination apparatus, that is, the reception apparatus 20 (S1201).

Then, the state estimation unit 150 according to the present embodiment estimates the state of the reception apparatus 20 on the basis of the environmental information received in step S1201 (S1202).

Then, the output control unit 140 according to the present embodiment performs control of various types of output based on the state of the reception apparatus 20 that is estimated in step S1202 (S1203).

### <2. Hardware configuration example>

An example of hardware configuration that is common to the transmission source apparatus 10 and the reception apparatus 20 according to the present disclosure is now described. FIG. 16 is a block diagram illustrating an example of hardware configuration of the transmission source apparatus 10 and the reception apparatus 20 according to the present disclosure. Referring to FIG. 16, the transmission source apparatus 10 and the reception apparatus 20 each includes, in one example, a CPU 871, a ROM 872, a RAM 873, a host bus 874, a bridge 875, an external bus 876, an interface 877, an input device 878, an output device 879, a storage 880, a drive 881, a connection port 882, and a communication device 883. Moreover, the hardware configuration shown here is illustrative, and some of components can be omitted. In addition, a component other than the components shown here can be further included.

### (CPU 871)

The CPU 871 functions as, in one example, an arithmetic processing unit or a control device, and controls some or all of the operations of each component on the basis of various programs recorded in the ROM 872, the RAM 873, the storage 880, or a removable recording medium 901.

### (ROM 872 and RAM 873)

The ROM 872 is a means for storing programs loaded into the CPU 871, data used for operation, or the like. The RAM 873 temporarily or permanently stores, in one example, a program to be loaded into the CPU 871, various parameters appropriately changing in executing the program, or the like.

### (Host bus 874, bridge 875, external bus 876, and interface 877)

The CPU 871, the ROM 872, and the RAM 873 are mutually connected via, in one example, the host bus 874 capable of high-speed data transmission. On the other hand, the host bus 874 is connected to the external bus 876 having a relatively low data transmission rate, in one example, via the bridge 875. In addition, the external bus 876 is connected to various components via the interface 877.

### (Input device 878)

Examples of the input device 878 include a mouse, a keyboard, a touch panel, buttons, a switch, a lever, or the like. Furthermore, examples of the input device 878 may include a remote controller capable of transmitting a control signal using infrared rays or other radio waves (hereinafter referred to as a remote controller). In addition, the input device 878 includes a speech input device such as a microphone.

### (Output device 879)

The output device 879 is a device capable of visually or audibly notifying the user of the acquired information, which includes a display device such as a cathode ray tube (CRT), an LCD, or an organic EL, an audio output device such as a loudspeaker or a headphone, a printer, a mobile phone, a facsimile, or the like. In addition, the output device 879 according to the present disclosure includes various vibration devices capable of outputting a tactile stimulus.

### (Storage 880)

The storage 880 is a device used to store various types of data. Examples of the storage 880 include a magnetic storage device such as hard disk drives (HDDs), a semiconductor storage device, an optical storage device, a magneto-optical storage device, or the like.

### (Drive 881)

The drive 881 is a device that reads information recorded on the removable recording medium 901 such as a magnetic disk, an optical disk, a magneto-optical disk, or semiconductor memory or writes information to the removable recording medium 901.

### (Removable recording medium 901)

Examples of the removable recording medium 901 include a DVD medium, a Blu-ray (registered trademark) medium, an HD DVD medium, various kinds of semiconductor storage media, or the like. Of course, the removable recording medium 901 may be, in one example, an IC card or an electronic device mounted with a contactless IC chip.

### (Connection port 882)

The connection port 882 is a port used for connection with an external connection device 902, such as a universal serial bus (USB) port, an IEEE 1394 port, a small computer system interface (SCSI), an RS-232C port, or an optical audio cable.

### (External connection device 902)

Examples of the external connection device 902 include a printer, a portable music player, a digital camera, a digital video camera, an IC recorder, or the like.

### (Communication device 883)

The communication device 883 is a communication device used for connection with a network, and examples thereof include a communication card for wired or wireless LAN, Bluetooth (registered trademark), or wireless USB (WUSB), a router for optical communication, a router for asymmetric digital subscriber line (ADSL), or various modems for communication.

### <3. Concluding remarks>

As described above, the transmission source apparatus 10 according to the present disclosure is capable of estimating the state of the reception apparatus 20 on the basis of the environmental information received from the reception apparatus 20 and performing control of various types of output based on the state. In addition, the reception apparatus 20 according to the present disclosure is capable of specifying the vibration type from the meta-information received from the transmission source apparatus 10 and outputting a tactile stimulus corresponding to the vibration type. Such a configuration makes it possible to reduce effectively the data communication traffic in information communication relating to vibration.

The preferred embodiment(s) of the present disclosure has/have been described above with reference to the accompanying drawings, whilst the present disclosure is not limited to the above examples. A person skilled in the art can find various alterations and modifications within the scope of the appended claims, and it should be understood that they will naturally come under the technical scope of the present disclosure.

Further, the respective steps in the processing of the transmission source apparatus 10 and the reception apparatus 20 in this specification are not necessarily executed in chronological order in accordance with the order illustrated in the flowcharts. In one example, the respective steps in the transmission source apparatus 10 and the reception apparatus 20 can be processed in the order different from the order illustrated in the flowcharts, or can also be processed in parallel.

Further, the effects described in this specification are merely illustrative or exemplified effects, and are not limitative. That is, with or in the place of the above effects, the technology according to the present disclosure can achieve other effects that are clear to those skilled in the art from the description of this specification.

Additionally, the present technology may also be configured as below.
(1) An information processing apparatus including:
   a communication unit configured to receive input information that is inputted on a user interface displayed on a transmission source apparatus and meta-information regarding the input information;
   an analysis unit configured to analyze the meta-information and specify a vibration type;
   a waveform storage unit configured to store the vibration type and vibration waveform data in association with each other; and
   an output control unit configured to cause an output unit to output a tactile stimulus corresponding to the vibration waveform data acquired from the waveform storage unit on the basis of the vibration type.
(2) The information processing apparatus according to (1),
   in which the meta-information includes object information regarding a selected object, and
   the analysis unit specifies the vibration type on the basis of the object information.
(3) The information processing apparatus according to (1) or (2),
   in which the meta-information includes selected picture information, and
   the analysis unit analyzes the picture information and specifies the vibration type.
(4) The information processing apparatus according to any one of (1) to (3),
   in which the meta-information includes inputted character information, and
   the analysis unit analyzes the character information and specifies the vibration type.
(5) The information processing apparatus according to any one of (1) to (4),
   in which the meta-information includes sensor information collected by the transmission source apparatus, and
   the analysis unit analyzes the sensor information and specifies the vibration type.
(6) The information processing apparatus according to any one of (1) to (5),
   in which the communication unit transmits information regarding the vibration type specified by the analysis unit to the transmission source apparatus.
(7) The information processing apparatus according to any one of (1) to (6),
   in which the output control unit acquires the vibration waveform data from an external device on the basis of the vibration type in a case where the vibration waveform data associated with the vibration type is not stored in the waveform storage unit.
(8) The information processing apparatus according to any one of (1) to (7),
   in which the meta-information includes output position information, and
   the output control unit controls output of a tactile stimulus by the output unit on the basis of the output position information.
(9) The information processing apparatus according to (8),
   in which the output control unit determines the output unit intended to output a tactile stimulus on the basis of the output position information.
(10) The information processing apparatus according to (8) or (9),
   in which the output position information includes tap information, and
   the output control unit controls the output of the tactile stimulus by the output unit on the basis of the tap information.
(11) The information processing apparatus according to any one of (1) to (10), further including:
   a state estimation unit configured to estimate a state of the transmission source apparatus on the basis of environmental information transmitted by a transmission destination apparatus,
   in which the output control unit controls display of a user interface regarding an application on the basis of a state of the transmission destination apparatus estimated by the state estimation unit.
(12) The information processing apparatus according to (11),
   in which the output control unit controls selectability of an object on the user interface on the basis of the state of the transmission source apparatus estimated by the state estimation unit.
(13) The information processing apparatus according to (11) or (12),
   in which the state estimation unit estimates at least any one of a gripping state, an installation state, an exercise state, or a manner state of the transmission destination apparatus on the basis of the environmental information, and
   the output control unit controls display of the user interface on the basis of estimation that the transmission destination apparatus is in the gripping state, the installation state, or the exercise state by the state estimation unit.
(14) The information processing apparatus according to any one of (11) to (13),
   in which the output control unit causes information regarding the state of the transmission destination apparatus estimated by the state estimation unit to be displayed on the user interface.
(15) The information processing apparatus according to any one of (11) to (14),
   in which the environmental information includes at least one of sensor information, schedule information, or application running information.
(16) The information processing apparatus according to any one of (1) to (15), further including:
   an output unit configured to output a tactile stimulus on the basis of control by the output control unit.
(17) The information processing apparatus according to any one of (1) to (16), further including:
   an output unit configured to display a user interface regarding an application on the basis of control by the output control unit.
(18) An information processing method performed by a processor, the information processing method including:
   receiving input information that is inputted on a user interface displayed on a transmission source apparatus and meta-information regarding the input information;
   analyzing the meta-information and specifying a vibration type;
   storing the vibration type and vibration waveform data in association with each other; and
   causing an output unit to output a tactile stimulus corresponding to the vibration waveform data acquired on the basis of the vibration type.
(19) A program causing a computer to function as an information processing apparatus including:
   a communication unit configured to receive input information that is inputted on a user interface displayed on a transmission source apparatus and meta-information regarding the input information;
   an analysis unit configured to analyze the meta-information and specify a vibration type;
   a waveform storage unit configured to store the vibration type and vibration waveform data in association with each other; and
   an output control unit configured to cause an output unit to output a tactile stimulus corresponding to the vibration waveform data acquired from the waveform storage unit on the basis of the vibration type.
(20) An information processing system including:
   a transmission source apparatus including
   an output control unit configured to control display of a user interface regarding an application, and
   a communication unit configured to transmit input information that is inputted on the user interface and meta-information regarding the input information; and
   a reception apparatus including
   a communication unit configured to receive the input information and the meta-information,
   an analysis unit configured to analyze the meta-information and specify a vibration type,
   a waveform storage unit configured to store the vibration type and vibration waveform data in association with each other, and
   an output control unit configured to cause an output unit to output a tactile stimulus corresponding to the vibration waveform data acquired from the waveform storage unit on the basis of the vibration type.

### Reference Signs List

- 10: transmission source apparatus
- 110: input unit
- 120: sensor unit
- 130: output unit
- 140: output control unit
- 150: state estimation unit
- 160: communication unit
- 20: reception apparatus
- 220: sensor unit
- 230: output unit
- 240: output control unit
- 250: analysis unit
- 260: waveform storage unit
- 270: communication unit
- 30: vibration DB
- 40: network

## Claims

1. An information processing apparatus comprising:
a communication unit configured to receive input information that is inputted on a user interface displayed on a transmission source apparatus and meta-information regarding the input information;
an analysis unit configured to analyze the meta-information and specify a vibration type;
a waveform storage unit configured to store the vibration type and vibration waveform data in association with each other; and
an output control unit configured to cause an output unit to output a tactile stimulus corresponding to the vibration waveform data acquired from the waveform storage unit on a basis of the vibration type.

2. The information processing apparatus according to claim 1,
wherein the meta-information includes object information regarding a selected object, and
the analysis unit specifies the vibration type on a basis of the object information.

3. The information processing apparatus according to claim 1,
wherein the meta-information includes selected picture information, and
the analysis unit analyzes the picture information and specifies the vibration type.

4. The information processing apparatus according to claim 1,
wherein the meta-information includes inputted character information, and
the analysis unit analyzes the character information and specifies the vibration type.

5. The information processing apparatus according to claim 1,
wherein the meta-information includes sensor information collected by the transmission source apparatus, and
the analysis unit analyzes the sensor information and specifies the vibration type.

6. The information processing apparatus according to claim 1,
wherein the communication unit transmits information regarding the vibration type specified by the analysis unit to the transmission source apparatus.

7. The information processing apparatus according to claim 1,
wherein the output control unit acquires the vibration waveform data from an external device on the basis of the vibration type in a case where the vibration waveform data associated with the vibration type is not stored in the waveform storage unit.

8. The information processing apparatus according to claim 1,
wherein the meta-information includes output position information, and
the output control unit controls output of a tactile stimulus by the output unit on a basis of the output position information.

9. The information processing apparatus according to claim 8,
wherein the output control unit determines the output unit intended to output a tactile stimulus on the basis of the output position information.

10. The information processing apparatus according to claim 8,
wherein the output position information includes tap information, and
the output control unit controls the output of the tactile stimulus by the output unit on a basis of the tap information.

11. The information processing apparatus according to claim 1, further comprising:
a state estimation unit configured to estimate a state of the transmission source apparatus on a basis of environmental information transmitted by a transmission destination apparatus,
wherein the output control unit controls display of a user interface regarding an application on a basis of a state of the transmission destination apparatus estimated by the state estimation unit.

12. The information processing apparatus according to claim 11,
wherein the output control unit controls selectability of an object on the user interface on a basis of the state of the transmission source apparatus estimated by the state estimation unit.

13. The information processing apparatus according to claim 11,
wherein the state estimation unit estimates at least any one of a gripping state, an installation state, an exercise state, or a manner state of the transmission destination apparatus on the basis of the environmental information, and
the output control unit controls display of the user interface on a basis of estimation that the transmission destination apparatus is in the gripping state, the installation state, or the exercise state by the state estimation unit.

14. The information processing apparatus according to claim 11,
wherein the output control unit causes information regarding the state of the transmission destination apparatus estimated by the state estimation unit to be displayed on the user interface.

15. The information processing apparatus according to claim 11,
wherein the environmental information includes at least one of sensor information, position information, schedule information, or application running information.

16. The information processing apparatus according to claim 1, further comprising:
an output unit configured to output a tactile stimulus on a basis of control by the output control unit.

17. The information processing apparatus according to claim 1, further comprising:
an output unit configured to display a user interface regarding an application on a basis of control by the output control unit.

18. An information processing method performed by a processor, the information processing method comprising:
receiving input information that is inputted on a user interface displayed on a transmission source apparatus and meta-information regarding the input information;
analyzing the meta-information and specifying a vibration type;
storing the vibration type and vibration waveform data in association with each other; and
causing an output unit to output a tactile stimulus corresponding to the vibration waveform data acquired on a basis of the vibration type.

19. A program causing a computer to function as an information processing apparatus comprising:
a communication unit configured to receive input information that is inputted on a user interface displayed on a transmission source apparatus and meta-information regarding the input information;
an analysis unit configured to analyze the meta-information and specify a vibration type;
a waveform storage unit configured to store the vibration type and vibration waveform data in association with each other; and
an output control unit configured to cause an output unit to output a tactile stimulus corresponding to the vibration waveform data acquired from the waveform storage unit on a basis of the vibration type.

20. An information processing system comprising:
a transmission source apparatus including
an output control unit configured to control display of a user interface regarding an application, and
a communication unit configured to transmit input information that is inputted on the user interface and meta-information regarding the input information; and
a reception apparatus including
a communication unit configured to receive the input information and the meta-information,
an analysis unit configured to analyze the meta-information and specify a vibration type,
a waveform storage unit configured to store the vibration type and vibration waveform data in association with each other, and
an output control unit configured to cause an output unit to output a tactile stimulus corresponding to the vibration waveform data acquired from the waveform storage unit on a basis of the vibration type.
